# EUROPÄISCHE PATENTSCHRIFT

(11) **EP 0 784 746 B1**
(45) Veröffentlichungstag und Bekanntmachung des Hinweises auf die Patenterteilung: **08.07.1998**
(21) Anmeldenummer: 95928964.6
(22) Anmeldetag: 23.08.1995
(51) Int. Cl.: F02D 41/22, F02D 33/00, F02D 11/10

(54) **SCHUTZSYSTEM FÜR EINE MIT AUFLADUNG BETRIEBENE BRENNKRAFTMASCHINE**
PROTECTIVE SYSTEM FOR A SUPERCHARGED INTERNAL COMBUSTION ENGINE
SYSTEME DE PROTECTION POUR MOTEUR A COMBUSTION INTERNE A SURALIMENTATION

(30) Priorität: 28.09.1994 DE 4434607
(43) Veröffentlichungstag der Anmeldung: 23.07.1997
(73) Patentinhaber: ROBERT BOSCH GMBH, 70442 Stuttgart (DE)
(72) Erfinder: KIENLE, Karin, D-71263 Weil der Stadt (DE); BÄUERLE, Michael, D-74354 Besigheim (DE)
(86) Internationale Anmeldenummer: DE9501114
(87) Internationale Veröffentlichungsnummer: WO9610128

(56) Entgegenhaltungen:
- US-A- 4 470 390
- US-A- 4 603 552
- US-A- 5 299 423
- Patent Abstracts of Japan, Band 7, Nr 44(-); & JP,A,57193737 (MAZDA MOTOR CORP.), 1982-11-29
- Patent Abstracts of Japan, Band 11, Nr 123(-); & JP,A,61265331 (NISSAN MOTOR CO LTD), 1986-11-25
- Patent Abstracts of Japan, Band 9, Nr 121(-); & JP,A,606029 (HONDA MOTOR CO LTD), 1985-01-12

## Beschreibung

### Stand der Technik

Die Erfindung betrifft ein Schutzsystem für eine mit Aufladung betriebene Brennkraftmaschine gemäß dem Oberbegriff des Anspruchs 1 oder des Anspruchs 11.

Ein derartiges Schutzsystem ist aus der nicht vorveröffentlichten DE-43 10 261 bekannt. Dort wird bei einer ersten Stufe der Überladung der Brennkraftmaschine ein Eingriff in die Steuerung und/oder Regelung der Aufladung vorgenommen und bei einer zweiten Stufe der Überladung wird die Kraftstoffzumessung zu einzelnen Zylindern nach einem vorgegebenen Ausblendmuster unterbrochen. Gegebenenfalls wird sukzessive auf weitere Ausblendmuster mit höherer Ausblendhäufigkeit übergegangen.

Bei einer aus der US-A-4,470,390 bekannten Brennkraftmaschine mit Aufladung wird in Abhängigkeit von mehreren Ladedruckschwellen eine Zylinderausblendung nach einem bestimmten Ausblendmuster vorgenommen, um die Maschine gegen Zerstörung durch Überladung zu schützen.

Aus der US-A-5,299,423 ist es bekannt, in Abhängigkeit vom Ladedruck die Drosselklappe zu verstellen, um dadurch zum Schutz der Maschine einen zu hohen Ladedruck zu vermeiden.

Der Erfindung liegt die Aufgabe zugrunde, einen optimalen Schutz einer mit Aufladung betriebenen Brennkraftmaschine sicherzustellen.

Im Gegensatz zum Stand der Technik findet bei der Erfindung kein direkter Eingriff in die Regelung der Aufladung statt. Weiterhin ist es bei der Erfindung vorgesehen, beim wiederholten Auftreten der Überladung die Schutzmaßnahmen schneller einzuleiten als beim erstmaligen Auftreten, d. h. die Ansprechzeiten des erfindungsgemäßen Schutzsystems werden geändert. Außerdem unterscheidet die Erfindung zwischen einem Überladezustand, der beispielsweise durch einen Überschwinger des Ladedruckregelkreises ausgelöst wird, und einem Überladezustand, der durch einen ernsthaften Defekt, beispielsweise durch eine gelöste Schlauchverbindung ausgelöst wird. Ein weiterer Unterschied der Erfindung zum Stand der Technik besteht darin, daß unter vorgebbaren Betriebsbedingungen sämtliche Maßnahmen, die infolge eines einmaligen oder mehrmaligen Überladezustandes aktiviert worden sind, wieder deaktiviert werden. Dabei werden auch die geänderten Ansprechzeiten wieder auf ihre ursprünglichen Werte gesetzt.

### Vorteile der Erfindung

Die Erfindung gemäß den Merkmalen des Anspruchs 1 hat den Vorteil, daß sie einen optimalen Schutz einer mit Aufladung betriebenen Brennkraftmaschine vor Beschädigung durch Überladung ermöglicht. Beim erfindungsgemäßen Schutzsystem werden einzelne Zylinder der Brennkraftmaschine nach einem vorgebbaren ersten Ausblendmuster von der Einspritzung ausgeblendet, wenn eine die Aufladung charakterisierende Größe eine vorgebbare erste Aktivierungsbedingung erfüllt.

Weiterhin werden einzelne Zylinder der Brennkraftmaschine nach einem vorgebbaren zweiten Ausblendmuster von der Einspritzung ausgeblendet, wenn die die Aufladung charakterisierende Größe eine vorgebbare zweite Aktivierungsbedingung erfüllt. Bei einem wiederholten Auftreten der ersten Aktivierungsbedingung wird die erste Aktivierungsbedingung geändert, und bei einem wiederholten Auftreten der zweiten Aktivierungsbedingung werden die erste und die zweite Aktivierungsbedingung geändert. Dies hat den Vorteil, daß bei einem erstmaligen Auftreten der Aktivierungsbedingungen diese Aktivierungsbedingungen so gestaltet sein können, daß ein irrtümliches Auslösen der Zylinderausblendung weitgehend ausgeschlossen werden kann. Dies hat in der Regel zur Folge, daß eine gewisse Zeit verstreicht bis die Zylinderausblendung aktiviert wird. Kommt es dagegen häufiger vor, daß eine Zylinderausblendung erforderlich ist, so sollte zur Schonung der Brennkraftmaschine nicht jedesmal erst diese Zeit verstreichen, bevor die Ausblendung aktiviert wird. Deshalb ist es vorteilhaft, die Aktivierungsbedingung nach dem ersten Auftreten entsprechend zu ändern.

Anstelle einer Zylinderausblendung kann auch ein Eingriff in die Drosselklappenstellung vorgenommen werden. Die gemäß Anspurch 1 verwendeten zwei Ausblendmuster für die Zylinder werden im Anspruch 11 durch zwei unterschiedlich starke Eingriffe in die Drosselklappenstellung ersetzt.

### Zeichnung

Die Erfindung wird nachstehend anhand der in der Zeichnung dargestellten Ausführungsbeispiele erläutert.

Es zeigen
Figur 1 eine schematische Darstellung einer mit Aufladung betriebenen Brennkraftmaschine,
Figur 2 ein Diagramm für den zeitlichen Verlauf der die Aufladung charakterisierenden Größe für den Fall, daß lediglich die erste Aktivierungsbedingung erfüllt ist,
Figur 3 ein Diagramm für den zeitlichen Verlauf der die Aufladung charakterisierenden Größe für den Fall, daß zunächst die erste Aktivierungsbedingung und anschließend die zweite Aktivierungsbedingung jeweils erstmals erfüllt sind,
Figur 4 ein Diagramm für den zeitlichen Verlauf der die Aufladung charakterisierenden Größe für den Fall, daß die Aktivierungsbedingungen zum wiederholten Male erfüllt sind,
Figur 5 ein Blockschaltbild des erfindungsgemäßen Schutzsystems und
Figur 6 ein Flußdiagramm zur Darstellung der Funktionsweise des erfindungsgemäßen Schutzsystems.

### Beschreibung der Ausführungsbeispiele

Das erfindungsgemäße Schutzsystem wird im folgenden anhand von Ausführungsbeispielen beschrieben, bei denen die Aufladung der Brennkraftmaschine durch den Ladedruck P charakterisiert wird. Die Erfindung ist aber nicht auf diesen Anwendungsfall beschränkt. Die Aufladung der Brennkraftmaschine kann beispielsweise auch durch die angesaugte Luftmasse oder Luftmenge mL charakterisiert werden. In den beschriebenen Ausführungsbeispielen wäre dann der Ladedruck P durch eine dieser Größen zu ersetzen.

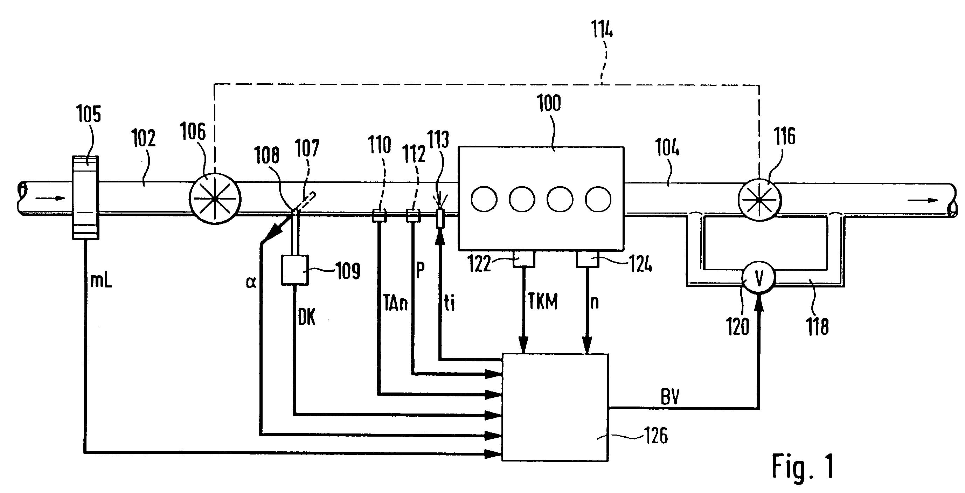

Figur 1 zeigt eine Brennkraftmaschine 100, der über einen Ansaugtrakt 102 Luft/Kraftstoff-Gemisch zugeführt wird und deren Abgase in einen Abgaskanal 104 abgegeben werden. Im Ansaugtrakt 102 sind - in Stromrichtung der angesaugten Luft gesehen - ein Luftmengenmesser oder Luftmassenmesser 105, beispielsweise ein Heißfilm-Luftmassenmesser, ein Verdichter 106, eine Drosselklappe 107 mit einem Sensor 108 zur Erfassung des Öffnungswinkels der Drosselklappe 107 und einem Antrieb 109 zur Betätigung der Drosselklappe, ein Temperatursensor 110 zur Erfassung der Temperatur der angesaugten Luft, ein Drucksensor 112 zur Erfassung des Ladedrucks und wenigstens eine Einspritzdüse 113 angebracht. Im Abgaskanal 104 ist eine Turbine 116 angebracht, die über ein Verbindungsmittel 114 den Verdichter 106 antreibt. Um die Turbine 116 herum führt eine Bypass-Leitung 118. In der Bypass-Leitung 118 ist ein Bypass-Ventil 120 angeordnet. An der Brennkraftmaschine 100 sind ein Temperatursensor 122 zur Erfassung der Temperatur der Brennkraftmaschine und ein Drehzahlsensor 124 angebracht.

Die Ausgangssignale mL des Luftmengenmessers oder Luftmassenmessers 105, α des Sensors 108 zur Erfassung des Öffnungswinkels der Drosselklappe 107, TAn des Temperatursensors 110, P des Drucksensors 112, TKM des Temperatursensors 122 und n des Drehzahlsensors 124 werden einem zentralen Steuergerät 126 über entsprechende Verbindungsleitungen zugeführt. Das Steuergerät 126 wertet die Sensorsignale aus und steuert über weitere Verbindungsleitungen den Antrieb 109 der Drosselklappe 107, die Einspritzdüse bzw. die Einspritzdüsen 113 und das Bypass-Ventil 120 an.

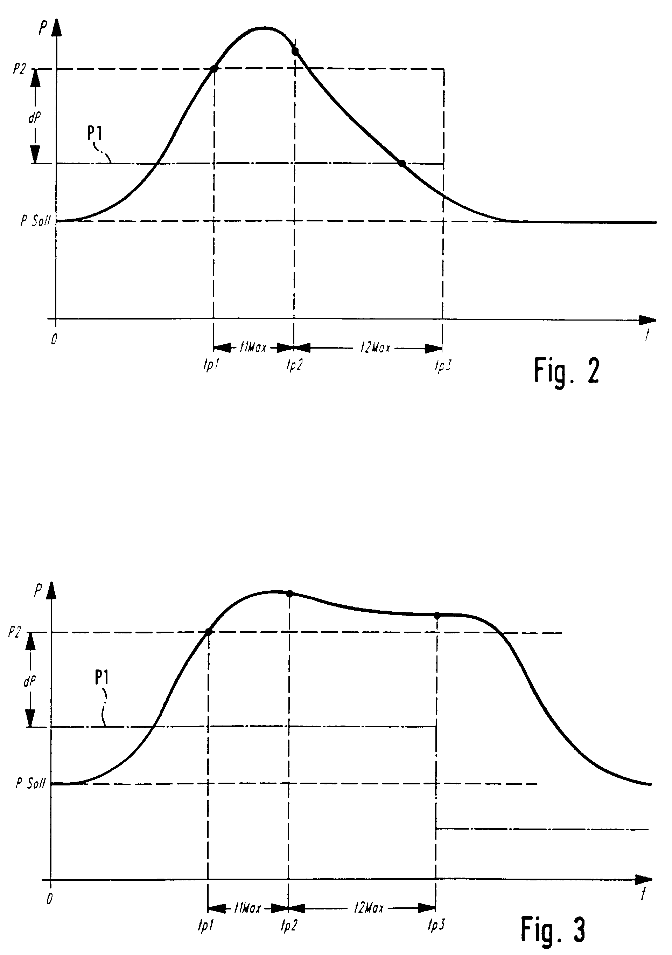

Figur 2 zeigt ein Diagramm für den zeitlichen Verlauf des Ladedrucks P, der die Aufladung der Brennkraftmaschine 100 repräsentiert. Auf der Abszisse ist die Zeit t aufgetragen und auf der Ordinate der Ladedruck P. Der Ladedruck P befindet sich anfangs in der Nähe des Sollwerts PSoll und steigt dann durch einen Überschwinger rasch an. Zur Zeit tpl übersteigt der Ladedruck P einen vorgebbaren Aktivierungsschwellwert P2, der durch eine waagerechte gestrichelte Linie dargestellt ist. Ab der Zeit tpl wird ein erstes Zeitintervall tlMax gerechnet, das zur Zeit tp2 endet. Zur Zeit tp2 befindet sich der Ladedruck P immer noch oberhalb des Aktivierungsschwellwerts P2. Somit ist eine erste Aktivierungsbedingung erfüllt. Die erste Aktivierungsbedingung lautet: "Der Ladedruck P überschreitet wenigstens für ein erstes Zeitintervall tlMax den Aktivierungsschwellwert P2". Die Erfüllung der ersten Aktivierungsbedingung hat zur Folge, daß zur Zeit tp2 damit begonnen wird, einzelne Zylinder nach einem vorgebbaren ersten Ausblendmuster von der Einspritzung auszublenden. Außerdem wird die erste Aktivierungssbedingung derart geändert, daß das Zeitintervall tlMax nicht mehr abgewartet wird, d. h. künftig wird das erste Ausblendmuster unmittelbar nach Überschreiten des Aktivierungsschwellwerts P2 aktiviert. Die erste Aktivierungsbedingung verbleibt solange in dieser geänerten Form, bis ein Rücksetzen auf die ursprüngliche Form stattfindet. Das Rücksetzen wird ausgelöst, wenn eine weiter unten beschriebenen Rücksetzbedingung erfüllt ist.

Infolge der Einspritzausblendung sinkt der Ladedruck P bei dem in Figur 2 dargestellten Beispiel rasch ab und unterschreitet schließlich einen Deaktivierungsschwellwert P1, der als waagerechte strichpunktierte Linie dargestellt ist. Zum Zeitpunkt der Unterschreitung dieses Deaktivierungsschwellwerts P1 ist ein bei der Zeit tp2 beginnendes zweites Zeitintervall t2Max noch nicht abgelaufen. Das Zeitintervall t2Max endet erst zu einem späteren Zeitpunkt tp3. Mit Unterschreiten des Deaktivierungsschwellwerts P1 wird das erste Ausblendmuster wieder deaktiviert, das heißt es findet wieder eine normale Einspritzung ohne Ausblendung einzelner Zylinder statt. Weiterhin ist mit Unterschreiten des Deaktivierungsschwellwerts P1 die Rücksetzbedingung erfüllt, falls sich die Brennkraftmaschine 100 unmittelbar davor für ein drittes Zeitintervall t3Max bei einer Drehzahl n oberhalb eines Schwellwerts in einem Vollastzustand befand. Wegen des so ausgelösten Rücksetzens der ersten Aktivierungsbedingung auf ihre ursprüngliche Form führt der in Figur 2 dargestellte Verlauf des Ladedrucks P insgesamt nicht zu einer Änderung der ersten Aktivierungsbedingung. Da die erste Aktivierungsbedingung letztendlich unverändert bleibt, würde unter den gleichen Betriebsbedingungen der Ladedruck wieder denselben Verlauf zeigen.

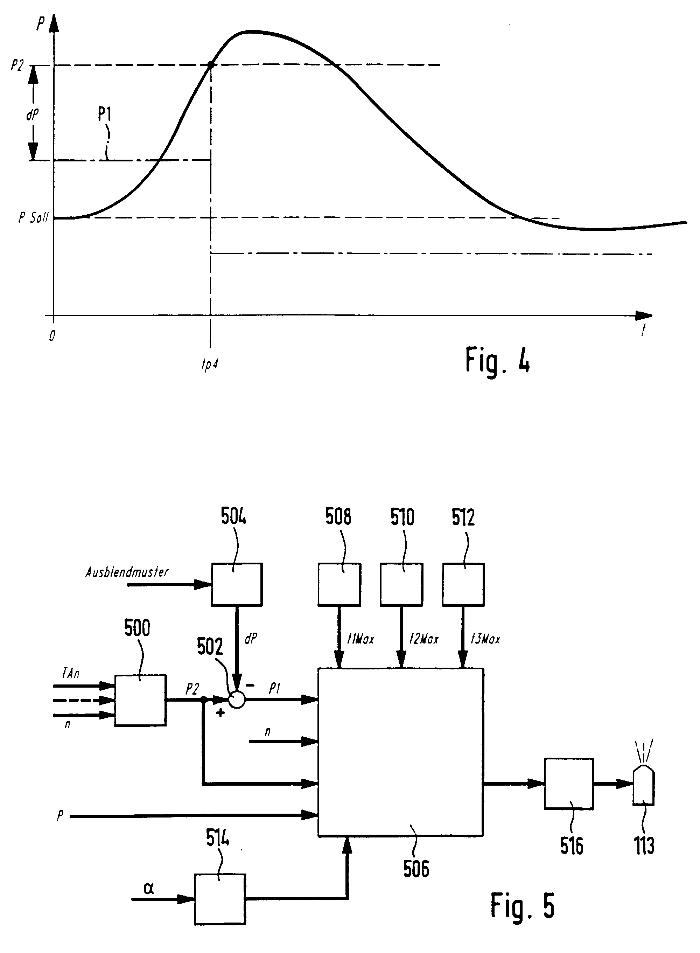

In Figur 3 ist ähnlich wie in Figur 2 der zeitliche Verlauf des Ladedrucks P dargestellt, allerdings für etwas andere Betriebsbedingungen. Auch im Diagramm der Figur 3 überschreitet der Ladedruck P zur Zeit tp1 den Aktivierungsschwellwert P2. Zur Zeit tp2 befindet sich der Ladedruck P immer noch oberhalb des Aktivierungsschwellwerts P2 und es wird - wie in Figur 2 - das erste Ausblendmuster aktiviert, da die erste Aktivierungsbedingung erfüllt ist. Außerdem wird ggf. die erste Aktivierungsbedingung geändert. Im Gegensatz zu Figur 2 befindet sich der Ladedruck P zum Zeitpunkt tp3, das heißt nach Ende des Zeitintervalls t2Max, noch oberhalb des Deaktivierungsschwellwerts P1 und eine zweite Aktivierungsbedingung ist erfüllt. Die zweite Aktivierungsbedingung lautet:"Der Ladedruck P überschreitet im Anschluß an die erfüllte erste Aktivierungsbedingung wenigstens für ein zweites Zeitintervall t2Max den Deaktivierungsschwellwert P1". Als Folge wird zur Zeit tp3 das zweite Ausblendmuster aktiviert, das eine höhere Ausblendhäufigkeit als das erste Ausblendmuster besitzt. Weiterhin wird zum Zeitpunkt tp3 der Deaktivierungsschwellwert P1 abgesenkt, so daß eine Deaktivierung des zweiten Ausblendmusters erst bei einem sehr niedrigen Ladedruck P erfolgt. Schließlich wird zur Zeit tp3 auch die zweite Aktivierungsbedingung geändert, die festlegt unter welchen Umständen das zweite Ausblendmuster aktiviert wird. Die zweite Aktivierungsbedingung wird derart geändert, daß das zweite Zeitintervall t2Max nicht mehr abgewartet wird, d.h. künftig wird unmittelbar nach Überschreiten des Aktivierungsschwellwerts P2 das zweite Ausblendmuster aktiviert. Da bei dem in Figur 3 dargestellten Verlauf des Ladedrucks P der Deaktivierungsschwellwert P1 nicht mehr unterschritten wird, werden die erste und zweite Aktivierungsbedingung nicht wieder zurückgesetzt. Die Auswirkung der Änderung der Aktivierungsbedingungen wird anhand des in Figur 4 dargestellten Verlaufs des Ladedrucks P erläutert.

Figur 4 zeigt ein Diagramm für den Verlauf des Ladedrucks P für den Fall, daß die Aktivierungsbedingungen beispielsweise infolge eines Ladedruckverlaufs gemäß Figur 3 geändert wurden. Zu Beginn des in Figur 4 dargestellten Verlaufs des Ladedrucks P ist weder das erste noch das zweite Ausblendmuster aktiv und der Deaktivierungsschwellwert P1 ist folglich nicht abgesenkt. Der Ladedruck P steigt an und überschreitet zu einer Zeit tp4 den Aktivierungsschwellwert P2. Durch die geänderten Aktivierungsbedingungen wird bewirkt, daß das zweite Ausblendmuster sofort zur Zeit tp4 aktiviert wird und gleichzeitig der Deaktivierungsschwellwert P1 abgesenkt wird. Ein Rücksetzen der Aktivierungsbedingungen auf ihre ursprüngliche Form erfolgt dann, wenn die Brennkraftmschine 100 wenigstens während einer Zeitspanne t3Max bei Vollast und oberhalb einer Drehzahlschwelle nl ohne Einspritzausblendung, d. h. unterhalb des Deaktivierungsschwellwerts P1, betrieben wurde.

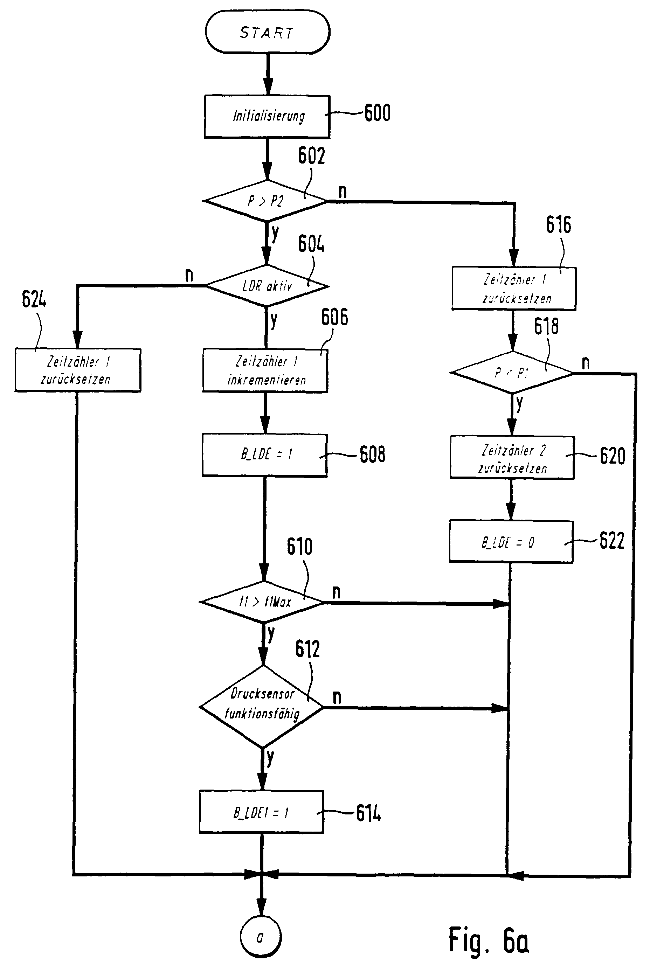

Figur 5 zeigt ein Blockschaltbild des erfindungsgemäßen Schutzsystems. Ein Kennfeld 500 ermittelt aus den Größen Ansauglufttemperatur TAn und Drehzahl n der Brennkraftmaschine 100 den Aktivierungsschwellwert P2 und stellt diesen am Ausgang des Kennfelds 500 bereit. Das Kennfeld 500 kann auch für andere Eingangsgrößen ausgelegt sein, beispielsweise eine Höheninformation. Dies ist durch die gestrichelte Linie angedeutet. Der Ausgang des Kennfelds 500 ist mit einem ersten Eingang eines Verknüpfungspunktes 502 verbunden. Im Verknüpfungspunkt 502 wird vom Aktivierungsschwellwert P2 ein Wert dP subtrahiert, der aus einer Kennlinie 504 ausgelesen wird. In den Eingang der Kennlinie 504 wird eine Information darüber eingespeist, ob und wenn ja welches Ausblendmuster aktiv ist. Das Ergebnis der Subtraktion im Verknüpfungspunkt 502, der Deaktivierungsschwellwert P1, wird an einen Eingang eines Blocks 506 weitergeleitet. An weiteren Eingängen des Blocks 506 liegen der Aktivierungsschwellwert P2, der Ladedruck P, die Drehzahl n, Werte für die Zeitintervalle tlMax, t2Max und t3Max, die von Festwertspeichern 508, 510 und 512 ausgegeben werden und eine von einem Block 514 ausgegebene Information darüber, ob ein Vollastzustand vorliegt, an. Am Eingang des Blocks 514 kann beispielsweise das Signal a für den Drosselklappenwinkel anliegen oder ein Ausgangssignal eines Vollastschalters. Der Block 506 ermittelt gemäß dem im Flußdiagramm der Figuren 6a - 6c dargestellten Verfahren, ob ein Eingriff in die Kraftstoffzumessung, das heißt die Aktivierung eines Ausblendmusters, erforderlich ist. Ist ein derartiger Eingriff erforderlich, so gibt der Block 506 ein entsprechendes Signal an einem Block 516 aus, der die Einspritzdüse bzw. die Einspritzdüsen 113 ansteuert.

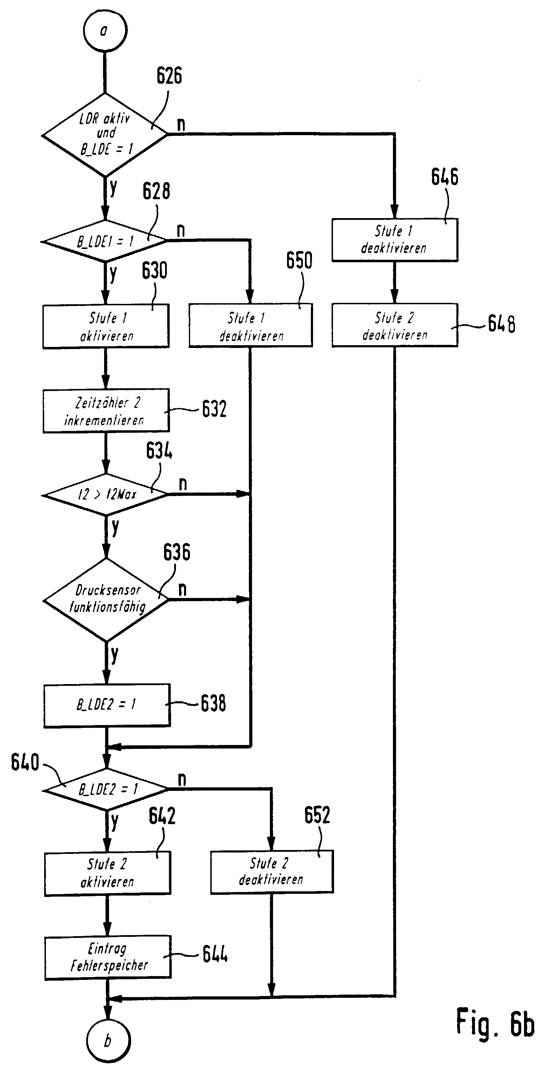

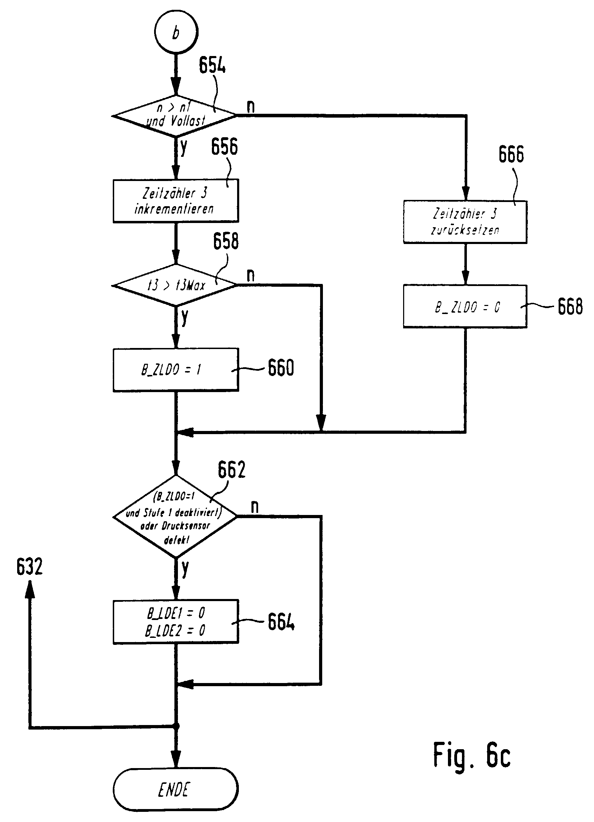

Figur 6 zeigt ein Flußdiagramm zur Erläuterung der Funktionsweise des erfindungsgemäßen Schutzsystems. Figur 6 ist unterteilt in Figur 6a, 6b und 6c, die jeweils einen Ausschnitt des Flußdiagramms zeigen. Die drei Ausschnitte des Flußdiagramms sind an den mit gleichen Buchstaben bezeichneten Schnittstellen zusammenzufügen, d. h. Figur 6a ist an der mit a bezeichneten Schnittstelle mit der ebenfalls mit a bezeichneten Schnittstelle der Figur 6b fortzusetzen und Figur 6b ist an der mit b bezeichneten Schnittstelle mit der ebenfalls mit b bezeichneten Schnittstelle der Figur 6c fortzusetzen.

Der in Figur 6a dargestellte Ausschnitt des Flußdiagramms beginnt mit einem Schritt 600. Im Schritt 600 wird eine Initialisierungsroutine durchgeführt, bei der sämtliche Größen, die beim Durchlaufen des Flußdiagramms eine Rolle spielen, einen Anfangswert erhalten. Dabei werden beispielsweise sämtliche Flags gelöscht. Auf Schritt 600 folgt eine Abfrage 602, in der abgefragt wird, ob das Signal P für den Ladedruck größer ist als der Aktivierungsschwellwert P2. Statt des Signals P kann auch ein anderes die Aufladung der Brennkraftmaschine 100 charakterisierendes Signal eingesetzt werden. Ein derartiges Signal kann beispielsweise aus dem Ausgangssignal mL des Luftmassenmessers oder Luftmengenmessers 105 und dem Ausgangssignal n des Drehzahlsensors 124 gebildet werden. Ist die Abfrage 602 erfüllt, so folgt eine Abfrage 604, in der überprüft wird, ob die Ladedruckregelung aktiv ist. Ist die Abfrage 604 erfüllt, so wird in einem darauffolgenden Schritt 606 ein Zeitzähler 1 inkrementiert, der eine Zeit tl registriert. An Schritt 606 schließt sich ein Schritt 608 an, in dem ein Flag B_LDE gesetzt wird. Auf Schritt 608 folgt eine Abfrage 610. In Abfrage 610 wird festgestellt, ob die Zeit tl einen Schwellwert tlMax überschreitet. Falls ja, schließt sich eine Abfrage 612 an, in der abgefragt wird, ob der Drucksensor 112 funktionsfähig ist. Wird statt des Signals P für den Ladedruck ein anderes Signal zur Charakterisierung der Aufladung herangezogen, so ist in Abfrage 612 die Funktionsweise des Sensors zu überprüfen, der dieses andere Signal erzeugt. Trifft Abfrage 612 zu, so folgt ein Schritt 614, in dem ein Flag B_LDE1 gesetzt wird. An Schritt 614 schließt sich eine mit a bezeichnete Schnittstelle zu dem in Figur 6b dargestellten Ausschnitt des Flußdiagramms an.

Falls die Abfrage 602 nicht erfüllt ist, wird nach der Abfrage 602 ein Schritt 616 ausgeführt. In Schritt 616 wird der Zeitzähler 1 zurückgesetzt. Auf Schritt 616 folgt eine Abfrage 618, ob das Signal P für den Ladedruck kleiner ist als ein Deaktivierungsschwellwert P1. Ist Abfrage 618 erfüllt, so schließt sich ein Schritt 620 an, in dem ein Zeitzähler 2 zurückgesetzt wird, der eine Zeit t2 registriert. Auf Schritt 620 folgt ein Schritt 622, in dem das Flag B_LDE gelöscht wird. An Schritt 622 schließt sich die mit a bezeichnete Schnittstelle an.

Ist die Abfrage 604 nicht erfüllt, d. h. die Ladedruckregelung ist nicht aktiv, so folgt ein Schritt 624, in dem der Zeitzähler 1 zurückgesetzt wird. An Schritt 624 schließt sich die mit a bezeichnete Schnittstelle an.

Ist die Abfrage 610 oder die Abfrage 612 nicht erfüllt, so schließt sich jeweils die mit a bezeichnete Schnittstelle an. Ebenso schließt sich an Abfrage 618 die mit a bezeichnete Schnittstelle an, wenn Abfrage 618 nicht erfüllt ist.

Der Durchlauf des in Figur 6b dargestellten Ausschnitts des Flußdiagramms beginnt mit der mit a bezeichneten Schnittstelle. An diese Schnittstelle schließt sich eine Abfrage 626 an. In Abfrage 626 wird abgeprüft, ob die Ladedruckregelung aktiv ist und das Flag B_LDE gesetzt ist. Falls Abfrage 626 erfüllt ist, folgt eine Abfrage 628, in der abgeprüft wird, ob das Flag B_LDE1 gesetzt ist. Ist Abfrage 628 erfüllt, so schließt sich ein Schritt 630 an, in dem eine Stufe 1 der Einspritzausblendung aktiviert wird und die erste Aktivierungsbedingung geändert wird, und daran schließt sich ein Schritt 632 an, in dem der Zeitzähler 2 inkrementiert wird. Das Aktivieren der Stufe 1 der Einspritzausblendung hat zur Folge, daß die Kraftstoffzufuhr zu einzelnen Zylindern nach einem vorgebbaren Ausblendmuster unterbrochen wird. Auf Schritt 632 folgt eine Abfrage 634, ob die Zeit t2 größer ist als ein Schwellwert t2Max. Falls ja, schließt sich eine Abfrage 636 an, ob der Drucksensor 112 funktionsfähig ist. Ist Abfrage 636 erfüllt, so wird in einem darauffolgenden Schritt 638 ein Flag B LDE2 gesetzt. Auf Schritt 638 folgt eine Abfrage 640, ob das Flag B_LDE2 gesetzt ist. Falls ja, folgt ein Schritt 642, in dem eine Stufe 2 der Einspritzausblendung aktiviert wird und die zweite Aktivierungsbedingung geändert wird, und darauf folgt ein Schritt 644, in dem in einen Fehlerspeicher eingetragen wird, daß die Stufe 2 der Einspritzausblendung aktiviert wurde. Die Stufe 2 der Einspritzausblendung bewirkt - ähnlich wie die Stufe 1 - eine Unterbrechung der Kraftstoffzufuhr zu einzelnen Zylindern nach einem vorgebbaren Ausblendmuster, wobei die Ausblendhäufigkeit größer ist als bei der Stufe 1. An Schritt 644 schließt sich eine mit b bezeichnete Schnittstelle des Flußdiagramms an.

Ist die Abfrage 626 nicht erfüllt, so schließt sich daran ein Schritt 646 an, in dem die Stufe 1 der Einspritzausblendung deaktiviert wird, d. h. die Einspritzung wird wieder uneingeschränkt zugelassen. An Schritt 646 schließt sich ein Schritt 648 an, in dem die Stufe 2 der Einspritzausblendung deaktiviert wird. An Schritt 648 schließt sich die mit b bezeichnete Schnittstelle an.

Ist die Abfrage 628 nicht erfüllt, so wird danach ein Schritt 650 ausgeführt, in dem die Stufe 1 der Einspritzausblendung deaktiviert wird. Nach Schritt 650 wird das Flußdiagramm mit der Abfrage 640 fortgesetzt.

Eine Fortsetzung des Flußdiagramms mit Abfrage 640 erfolgt auch dann, wenn die Abfrage 634 oder die Abfrage 636 nicht erfüllt ist. Ist die Abfrage 640 nicht erfüllt, so schließt sich daran ein Schritt 652 an, in dem die Stufe 2 der Einspritzausblendung deaktiviert wird. An Schritt 652 schließt sich die mit b bezeichnete Schnittstelle an.

Der in Figur 6c dargestellte Ausschnitt des Flußdiagramms beginnt mit der mit b bezeichneten Schnittstelle, mit der der in Figur 6b dargestellte Ausschnitt endet. Auf die Schnittstelle b folgt eine Abfrage 654, ob das Signal n für die Drehzahl größer ist als ein Schwellwert nl und ob sich die Brennkraftmaschine 100 im Vollastzustand befindet. Ob ein Vollastzustand vorliegt kann beispielsweise aus dem Signal a für den Öffnungswinkel der Drosselklappe 107 oder aus dem Schaltzustand eines Vollastschalters ermittelt werden. Ist die Abfrage 654 erfüllt, so wird in einem darauffolgenden Schritt 656 ein Zeitzähler 3 inkrementiert, der eine Zeit t3 registriert. Auf Schritt 656 folgt eine Abfrage 658, ob die Zeit t3 größer ist als ein vorgebbarer Schwellwert t3Max. Ist die Abfrage 658 erfüllt, so schließt sich ein Schritt 660 an, in dem ein Flag B_ZLDO gesetzt wird. Auf Schritt 660 folgt eine Abfrage 662, ob das Flag B_ZLDO gesetzt ist und die Stufe 1 der Einspritzausblendung deaktiviert ist oder ob der Drucksensor 112 defekt ist. Ist die Abfrage 662 erfüllt, so schließt sich daran ein Schritt 664 an, in dem das Flag B_LDE1 und das Flag B_LDE2 gelöscht werden. Mit Schritt 664 ist der Durchlauf des Flußdiagramms beendet.

Ist die Abfrage 654 nicht erfüllt, so schließt sich ein Schritt 666 an, in dem der Zeitzähler 3 zurückgesetzt wird. Auf Schritt 666 folgt ein Schritt 668, in dem das Flag B_ZLDO gelöscht wird. Nach Schritt 668 wird das Flußdiagramm mit Abfrage 662 fortgesetzt. Zu Abfrage 662 gelangt man auch, wenn die Abfrage 658 nicht erfüllt ist. Ist Abfrage 662 nicht erfüllt, so ist der Durchlauf des Flußdiagramms beendet. Nach Beendigung des Durchlauf des Flußdiagramms wird ein erneuter Durchlauf gestartet. Die Initialisierungsroutinen des Schrittes 600 werden allerdings nur beim ersten Durchlauf während eines Fahrzyklus ausgeführt, d. h. bei einem erneuten Durchlauf wird das Flußdiagramm bei Schritt 602 gestartet.

Der in Figur 2 dargestellte zeitliche Verlauf des Signals P für den Ladedruck kann sich durch folgende Durchläufe durch das Flußdiagramm ergeben:

Falls es sich um einen erstmaligen Durchlauf seit Starten der Brennkraftmaschine 100, wird zunächst Schritt 600 ausgeführt. Das Signal P für den Ladedruck ist anfangs kleiner als der Aktivierungsschwellwert P2, so daß die Abfrage 602 nicht erfüllt ist und somit als nächstes Schritt 616 ausgeführt wird. Da das Signal P für den Ladedruck anfangs auch kleiner als der Deaktivierungsschwellwert ist, ist Abfrage 618 erfüllt und es folgen die Schritte 620 und 622. Da Schritt 608 bislang noch nicht ausgeführt wurde, ist Abfrage 626 nicht erfüllt, so daß die Schritte 646 und 648 ausgeführt werden. Der weitere Durchlauf des Flußdiagramms bis zum Ende (siehe Figur 6c) ist für den in Figur 2 dargestellten Verlauf des Signals P für den Ladedruck nicht relevant und wird daher an dieser Stelle nicht näher erläutert.

Der bislang geschilderte Durchlauf durch das Flußdiagramm wiederholt sich solange, bis das Signal P für den Ladedruck den Deaktivierungsschwellwert P1 überschreitet. Ab diesem Zeitpunkt werden bei sonst unverändertem Durchlauf durch das Flußdiagramm die Schritte 620 und 622 ausgelassen.

Eine markante Änderung tritt ab dem Zeitpunkt tpl ein, ab dem das Signal P den Aktivierungsschwellwert P2 überschreitet. Dann wird Abfrage 604 ausgeführt und in Schritt 606 der Zeitzähler 1 inkrementiert und in Schritt 608 das Flag B LDE gesetzt. Dies wird solange wiederholt, bis Abfrage 610 erfüllt ist. Somit ist die Aktivierungsbedingung für die Einspritzausblendung der Stufe 1 erfüllt. Abfrage 610 ist ab dem in Figur 2 dargestellten Zeitpunkt tp2 erfüllt. Dann wird in Schritt 614 das Flag B_LDE1 gesetzt und es sind sowohl Abfrage 626 als auch Abfrage 628 erfüllt, so daß Schritt 630 ausgeführt wird, der die Stufe 1 der Einspritzausblendung aktiviert. Das Setzen des Flags B_LDE1 in Schritt 614 hat zur Folge, daß die erste Aktivierungsbedingung derart geändert wird, daß das Zeitintervall tlMax nicht mehr abgewartet wird. Anschließend wird Schritt 632 ausgeführt, der den Zeitzähler 2 inkrementiert. Abfrage 634 ist nicht erfüllt, so daß die Stufe 2 der Einspritzausblendung nicht aktiviert wird. Um Abfrage 634 zu erfüllen, muß der Zeitzähler 2 das Zeitintervall t2Max überschreiten. Die Inkrementierung des Zeitzählers 2 (siehe Schritt 632) wird jedoch vorher abgebrochen, da das Signal P für den Ladedruck den Deaktivierungsschwellwert P1 unterschreitet. Somit ist Abfrage 618 erfüllt und das Flag B_LDE wird in Schritt 622 gelöscht. Das hat zur Folge, daß Abfrage 626 nicht erfüllt ist und Schritt 632 nicht ausgeführt wird. Stattdessen wird unter anderem Schritt 646 ausgeführt, d. h. die Einspritzausblendung der Stufe 1 wird deaktiviert. Außerdem wird durch wiederholtes Ausführen des Schrittes 656 der Zeitzähler 3 hochgezählt und danach in Schritt 664 die erste Aktivierungsbedingung zurückgesetzt, indem das Flag B_LDE1 gelöscht wird.

Bei dem in Figur 3 dargestellten Verlauf des Signals P wird das Flußdiagramm bis zum Zeitpunkt tp2 in der bereits geschilderten Weise durchlaufen. Im Gegensatz zu Figur 2 wird die Inkrementierung des Zeitzählers 2 jedoch nicht vor Erreichen des Zeitpunkts tp3 abgebrochen, da das Signal P zum Zeitpunkt tp3 noch oberhalb des Deaktivierungsschwellwerts P1 liegt. Folglich ist die Abfrage 634 erfüllt und bei einem funktionsfähigen Drucksensor 112 wird das Flag B_LDE2 in Schritt 638 gesetzt. Somit ist auch Abfrage 640 erfüllt und es wird in Schritt 642 die Stufe 2 der Einspritzausblendung aktiviert. Mit dem Aktivieren der Stufe 2 wird gleichzeitig der Deaktivierungsschwellwert P1 abgesenkt. Das Setzen des Flags B_LDE2 hat zur Folge, daß die zweite Aktivierungsbedingung derart geändert wird, daß das Zeitintervall t2Max nicht mehr abgewartet wird.

In Figur 4 verläuft das Signal P anfangs unterhalb des Deaktivierungsschwellwerts P1, so daß während des Durchlaufs des Flußdiagramms Schritt 622 ausgeführt wird, d. h. das Flag B LDE wird gelöscht. Wegen der Abfrage 626 ist ein Aktivieren der Einspritzausblendung aber nur bei gesetztem Flag B LDE möglich. Das Setzen des Flags B LDE erfolgt zum Zeitpunkt tp4. Zu diesem Zeitpunkt überschreitet das Signal P den Aktivierungsschwellwert P2. Somit ist die Abfrage 602 erfüllt und bei aktiver Ladedruckregelung wird unter anderem Schritt 608 ausgeführt, der das Flag B_LDE setzt. Da die Zeitintervalle tlMax und t2Max wegen der Vorgeschichte (siehe oben) jeweils nicht abgewartet müssen (Flags B_LDE1 und B_LDE2 sind gesetzt), werden nach Schritt 610 die Schritte 626 bis 634 und 640 bis 644 ausgeführt, d. h. es wird unter anderem die Stufe 2 der Einspritzausblendung aktiviert.

Neben den in den Figuren 2 bis 4 dargestellten Verläufen des Signals P sind auch andere Verläufe möglich. Beispielsweise kann das Signal P so verlaufen, daß die Änderungen der Aktivierungsbedindungen rückgängig gemacht werden. Dies entspricht einem Durchlauf des in Figur 6c dargestellten Ausschnitts des Flußdiagramms von Schritt 654 bis Schritt 662, bei dem sämtliche Abfragen erfüllt sind, d. h. die Brennkraftmaschine 100 wird für wenigstens eine Zeit t3Max bei Vollast und oberhalb der Drehzahlschwelle nl betrieben und die Stufe 1 der Einspritzausblendung ist deaktiviert. Dann werden im Schritt 664 die Flags B_LDE1 und B_LDE2 gelöscht.

In einem vorteilhaften Ausführungsbeispiel der Erfindung werden das erste und das zweite Ausblendmuster jeweils so gewählt, daß das erste. und das zweite Ausblendmuster nach je einer vorgebbaren Anzahl von Betriebszyklen alle Zylinder der Brennkraftmaschine wenigstens einmal erfaßt haben.

In einer Variante der Erfindung findet statt des Eingriffs in die Einspritzung mittels Zylinderausblendung ein Eingriff in die Drosselklappenstellung und damit in die Luftzufuhr zur Brennkraftmaschine 100 statt. Durch Verringerung des Öffnungswinkels a der Drosselklappe 107 über eine entsprechende Ansteuerung des Antriebs 109 wird die Luftzufuhr verringert, so daß die Aufladung der Brennkraftmaschine 100 wirksam reduziert werden kann. Das erfindungsgemäße Verfahren bleibt prinzipiell unverändert. Es werden lediglich das erste und zweite Ausblendmuster durch zwei unterschiedlich starke Eingriffe in die Drosselklappenstellung ersetzt.

## Patentansprüche

1. Schutzsystem für eine mit Aufladung betriebene Brennkraftmaschine (100), wobei
- einzelne Zylinder nach einem vorgebbaren 1. Ausblendmuster von der Einspritzung ausgeblendet werden, wenn eine die Aufladung charakterisierende Größe eine vorgebbare 1. Aktivierungsbedingung erfüllt,
- einzelne Zylinder nach einem vorgebbaren 2. Ausblendmuster von der Einspritzung ausgeblendet werden, wenn die die Aufladung charakterisierende Größe eine vorgebbare 2. Aktivierungsbedingung erfüllt, dadurch gekennzeichnet, daß
- die 1. oder die 2. Aktivierungsbedingung verändert werden, wenn die 1. oder die 2. Aktivierungsbedingung wenigstens einmal aufgetreten ist.

2. Schutzsystem nach Anspruch 1, dadurch gekennzeichnet, daß die 1. Aktivierungsbedingung darin besteht, daß die die Aufladung charakterisierende Größe wenigstens für ein vorgebbares 1. Zeitintervall (tlMax) einen vorgebbaren Aktivierungsschwellwert (P2) überschreitet.

3. Schutzsystem nach einem der vorhergehenden Ansprüche, dadurch gekennzeichnet, daß die 2. Aktivierungsbedingung darin besteht, daß die die Aufladung charakterisierende Größe wenigstens für ein vorgebbares 2. Zeitintervall (t2Max), das sich an das 1. Zeitintervall (t1Max) anschließt, einen vorgebbaren Deaktivierungsschwellwert (P1) überschreitet.

4. Schutzsystem nach einem der vorhergehenden Ansprüche, dadurch gekennzeichnet, daß dann, wenn die 1. Aktivierungsbedingung wenigstens einmal aufgetreten ist, die 1. Aktivierungsbedingung derart geändert wird, daß die Ausblendung der Einspritzung schneller aktiviert wird oder dann, wenn die 2. Aktivierungsbedingung wenigstens einmal aufgetreten ist, die 2. Aktivierungsbedingung derart geändert wird, daß die Ausblendung der Einspritzung schneller aktiviert wird.

5. Schutzsystem nach einem der Ansprüche 2 - 4, dadurch gekennzeichnet, daß bei der geänderten 1. Aktivierungsbedingung das vorgebbare 1. Zeitintervall (t1Max) die Länge 0 besitzt oder bei der geänderten 2. Aktivierungsbedingung das vorgebbare 2. Zeitintervall (t2Max) die Länge 0 besitzt.

6. Schutzsystem nach einem der vorhergehenden Ansprüche, dadurch gekennzeichnet, daß das 1. oder 2. Ausblendmuster wieder deaktiviert wird, wenn eine vorgebbare Deaktivierungsbedingung erfüllt ist.

7. Schutzsystem nach Anspruch 6, dadurch gekennzeichnet, daß die Deaktivierungsbedingung darin besteht, daß die die Aufladung charakterisierende Größe (P) den Deaktivierungsschwellwert (P1) unterschreitet, wobei der Deaktivierungsschwellwert (P1) abhängig davon vorgebbar ist, ob das 1. oder das 2. Ausblendmuster aktiviert ist.

8. Schutzsystem nach einem der Ansprüche 4 bis 7, dadurch gekennzeichnet, daß die Änderung der 1. Aktivierungsbedingung und die Änderung der 2. Aktivierungsbedingung rückgängig gemacht werden, wenn eine Rücksetzbedingung erfüllt ist.

9. Schutzsystem nach Anspruch 8, dadurch gekennzeichnet, daß die Rücksetzbedingung darin besteht, daß sich die Brennkraftmaschine (100) wenigstens für ein vorgebbares 3. Zeitintervall (t3Max) bei einer Drehzahl (n) oberhalb eines Schwellwerts (n1) in einem Vollastzustand befindet und die die Aufladung charakterisierende Größe (P1) unterhalb des vom Ausblendmuster abhängigen Deaktivierungsschwellwerts (P1) liegt.

10. Schutzsystem nach Anspruch 1, dadurch gekennzeichnet, daß das 1. und das 2. Ausblendmuster nach je einer vorgebbaren Anzahl von Betriebszyklen alle Zylinder der Brennkraftmaschine (100) wenigstens einmal erfaßt haben.

11. Schutzsystem für eine mit Aufladung betriebene Brennkraftmaschine (100), dadurch gekennzeichnet, daß
- eine 1. Verringerung des Öffnungswinkels der Drosselklappe vorgenommen wird, wenn eine die Aufladung charakterisierende Größe eine vorgebbare 1. Aktivierungsbedingung erfüllt,
- eine 2. Verringerung des Öffnungswinkels der Drosselklappe vorgenommen wird, wenn die die Aufladung charakterisierende Größe eine vorgebbare 2. Aktivierungsbedingung erfüllt und
- die 1. oder die 2. Aktivierungsbedingung verändert werden, wenn die 1. oder die 2. Aktivierungsbedingung wenigstens einmal aufgetreten ist.

## Claims

1. Protective system for a supercharged internal combustion engine (100),
- individual cylinders being shut off from the injection according to a prescribable 1st shutting-off pattern if a variable which characterizes the supercharging fulfils a prescribable 1st activation condition,
- individual cylinders being shut off from the injection according to a prescribable 2nd shutting-off pattern if the variable which characterizes the supercharging fulfils a prescribable 2nd activation condition, characterized in that
- the 1st or the 2nd activation condition are changed if the 1st or the 2nd activation condition has occurred at least once.

2. Protective system according to Claim 1, characterized in that the 1st activation condition consists in the fact that the variable which characterizes the supercharging exceeds a prescribable activation threshold value (P2) at least for a prescribable 1st time interval (t1Max).

3. Protective system according to one of the preceding claims, characterized in that the 2nd activation condition consists in the fact that the variable which characterizes the supercharging exceeds a prescribable deactivation threshold value of (P1) at least for a prescribable 2nd time interval (t2Max) which follows the 1st time interval (t1Max).

4. Protective system according to one of the preceding claims, characterized in that if the 1st activation condition has occurred at least once, the 1st activation condition is changed in such a way that the shutting-off of the injection is activated more quickly, or if the 2nd activation condition has occurred at least once, the 2nd activation condition is changed in such a way that the shutting-off of the injection is activated more quickly.

5. Protective system according to one of Claims 2-4, characterized in that when the 1st activation condition is changed, the prescribable 1st time interval (t1Max) has the length 0, or when the 2nd activation condition is changed, the prescribable 2nd time interval (t2Max) has the length 0.

6. Protective system according to one of the preceding claims, characterized in that the 1st or 2nd shutting-off pattern is deactivated again if a prescribable deactivation condition is fulfilled.

7. Protective system according to Claim 6, characterized in that the deactivation condition consists in the fact that the variable (P) which characterizes the supercharging drops below the deactivation threshold value (P1), the deactivation threshold value (P1) being prescribable as a function of whether the 1st or the 2nd shutting-off pattern is activated.

8. Protective system according to one of Claims 4 to 7, characterized in that the change of the 1st activation condition and the change of the 2nd activation condition can be reversed if a resetting condition is fulfilled.

9. Protective system according to Claim 8, characterized in that the resetting condition consists in the fact that the internal combustion engine (100) is in a full-load state at least for one prescribable 3rd time interval (t3Max) at a rotational speed (n) above a threshold value (n1) and the variable (P1) which characterizes the supercharging lies below the deactivation threshold value (P1) which is dependent on the shutting-off pattern.

10. Protective system according to Claim 1, characterized in that the 1st and the 2nd shutting-off patterns have sensed all the cylinders of the internal combustion engine (100) at least once after, in each case, a prescribable number of operating cycles.

11. Protective system for a supercharged internal combustion engine (100), characterized in that
- a 1st reduction in the angle of aperture of the throttle valve is performed if a variable which characterizes the supercharging fulfils a prescribable 1st activation condition,
- a 2nd reduction in the angle of aperture of the throttle valve is performed if the variable which characterizes the supercharging fulfils a prescribable 2nd activation condition, and
- the 1st or the 2nd activation conditions are changed if the 1st or the 2nd activation condition has occurred at least once.

## Revendications

1. Système de protection d'un moteur à combustion interne (100) suralimenté,
selon lequel,
- différents cylindres peuvent être éliminés de l'injection selon un premier modèle d'élimination prédéterminé si la grandeur caractéristique de la suralimentation satisfait à une première condition d'activation prédéterminée,
- les différents cylindres peuvent être éliminés de l'injection selon un second modèle d'élimination prédéterminé si la grandeur caractéristique de la suralimentation satisfait à une deuxième condition d'activation prédéterminée,
caractérisé en ce que
la première ou la seconde condition d'activation sont modifiées si la première ou la seconde condition d'activation se sont produites au moins une fois.

2. Système de protection selon la revendication 1,
caractérisé en ce que
la première condition d'activation signifie que la grandeur caractéristique de la suralimentation a été dépassée au moins pendant un premier intervalle de temps prédéterminé (t1Max) pour un seuil d'activation prédéterminé (P2).

3. Système de protection selon l'une quelconque des revendications précédentes,
caractérisé en ce que
la deuxième condition d'activation signifie que la grandeur caractérisant la suralimentation dépasse au moins pendant un second intervalle de temps prédéterminé (t2Max) qui fait suite au premier intervalle de temps (t1Max), un seuil de désactivation prédéterminé (P1).

4. Système de protection selon l'une quelconque des revendications précédentes,
caractérisé en ce que
si la première condition d'activation se produit au moins une fois, on modifie cette première condition d'activation pour que l'élimination de l'injection soit activée plus rapidement ou si la seconde condition d'activation s'est produite au moins une fois, la seconde condition d'activation est modifiée pour que l'élimination de l'injection soit activée plus rapidement.

5. Système de protection selon l'une quelconque des revendications 2 à 4,
caractérisé en ce que
lorsque la première condition d'activation a été modifiée, le premier intervalle de temps prédéterminé (t1Max) a une longueur égale à 0 ou lorsque la seconde condition d'activation a été modifiée le second intervalle de temps prédéterminé (t2Max) a une longueur égale à 0.

6. Système de protection selon l'une quelconque des revendications précédentes,
caractérisé en ce que
le premier ou le second modèle d'élimination sont de nouveau désactivés si une condition de désactivation prédéterminée est remplie.

7. Système de protection selon la revendication 6
caractérisé en ce que
la condition de désactivation signifie que la grandeur (P) caractéristique de la suralimentation passe en dessous du seuil de désactivation (P1), ce seuil de désactivation (P1) étant prédéterminé en fonction de ce que le premier ou le second modèle d'élimination ont été activés.

8. Système de protection selon l'une quelconque des revendications 4 à 7,
caractérisé en ce que
la modification de la première condition d'activation et la modification de la seconde condition d'activation sont remises à l'état initial si une condition de remise à l'état initial est satisfaite.

9. Système de protection selon la revendication 8,
caractérisé en ce que
la condition de remise à l'état initial signifie que le moteur à combustion interne (100) se trouve au moins pendant un troisième intervalle de temps prédéterminé (t3Max) à une vitesse de rotation (n) supérieure à un seuil (n1) à l'état de charge maximale et que la grandeur caractéristique de la suralimentation (P1) se trouve en dessous du seuil de désactivation (P1) dépendant du modèle d'élimination.

10. Système de protection selon la revendication 1,
caractérisé en ce que
le premier et le second modèle d'élimination utilisent tous les cylindres du moteur à combustion interne (100) au moins une fois pour un nombre de cycles de fonctionnement prédéterminés.

11. Système de protection d'un moteur à combustion interne suralimenté (100),
caractérisé en ce que
on effectue une première diminution de l'angle d'ouverture du volet d'étranglement si une grandeur caractéristique de la suralimentation remplit une première condition d'activation prédéterminée,
- on effectue une deuxième diminution de l'angle d'ouverture du volet d'étranglement si la grandeur caractéristique de la suralimentation remplit une seconde condition d'activation prédéterminée et,
- on modifie la première ou la seconde condition d'activation si la première ou la seconde condition d'activation se produisent au moins une fois.
